# EUROPEAN PATENT APPLICATION

(11) **EP 4 250 518 A1**
(43) Date of publication of application: **27.09.2023**
(21) Application number: 22164461.0
(22) Date of filing: 25.03.2022
(51) Int. Cl.: H02J 7/00, H02J 50/00, H02J 50/20, H02J 50/40, H02J 50/80

(54) **CHARGING A BATTERY OF A BATTERY POWERED DEVICE**

(71) Applicant: BrainLit AB, 223 63 Lund (SE)
(72) Inventor: Singvall, Jacob, 237 32 Bjärred (SE); Roselius, Frans, 268 31 Svalöv (SE); WINGREN, Tord, 222 36 Lund (SE); Lindoff, Bengt, 237 35 Bjärred (SE)
(74) Representative: AWA Sweden AB

(57) **Abstract**

The present invention relates to a method for charging a battery (110) of a battery powered device (100). The method comprising: at the battery powered device (100), detecting (S402) that a state of charge of the battery (110) of the battery powered device (100) is below a first threshold; wirelessly transmitting (S404), from the battery powered device (100), to a control engine (200), a charging-request signal; instructing (S406), by means of the control engine (200), an electromagnetic-radiation emitter (300) to expose the battery powered device (100) for electromagnetic radiation; and charging (S408) the battery (110) of the battery powered device (100) by harvesting energy from the electromagnetic radiation emitted from the electromagnetic-radiation emitter (300). A battery powered device (100) and a control engine (200) are also disclosed.

## Description

### Technical field

The present invention relates to charging a battery of a battery powered device. Especially, a battery-powered device is disclosed which battery-powered device is configured to communicate its need for being charged. Moreover, a control engine configured to handle charging requests from one or more battery-powered devices is disclosed.

### Background

Many technical systems of today have various devices that communicates wirelessly with one or more other devices of the system. One example of such a technical system is a lighting system. In a lighting system a device that communicates wirelessly with one or more other devices of the system can be a button or dimmer configured to control a light intensity etc. for one or more luminaries of the lighting system. Another example of such a technical system is a monitoring system, e.g., monitoring an environment of a building. Such a monitoring system may comprise different devices such as camera(s), smoke detector(s), presence sensor(s), etc.

Many such devices of a technical system are battery powered. Even if such a battery powered device is made energy efficient, e.g., by low power wireless communication protocols such as Bluetooth Low Energy, BLE, battery replacement may still be a maintenance issue. Especially if there are many battery powered devices in the technical system.

### Summary of the invention

It is an object to mitigate, alleviate or eliminate one or more of the above-identified deficiencies in the art and disadvantages singly or in any combination and solve at least the above-mentioned problem.

According to a first aspect a method for charging a battery of a battery powered device is provided. The method comprising: at the battery powered device, detecting that a state of charge of the battery of the battery powered device is below a first threshold; wirelessly transmitting, from the battery powered device, to a control engine, a charging-request signal; instructing, by means of the control engine, an electromagnetic-radiation emitter to expose the battery powered device for electromagnetic radiation; and charging the battery of the battery powered device by harvesting energy from the electromagnetic radiation emitted from the electromagnetic-radiation emitter.

The control engine and the battery powered device are embodied in different devices being at a distance from each other. The control engine may even be distributed among different devices. Hence, the battery powered device is wirelessly communicating with the control engine. The present invention is based on the concept of harvesting energy from electromagnetic radiation. Such harvesting is well known in the art and may, e.g., be made from visible light and/or radio waves.

According to the present invention a battery of a battery powered device may be charged when needed. Hence, the electromagnetic-radiation emitter may be turned on only in case charging is actually requested for. This enables and energy efficient way of charging the battery. Moreover, by limiting the charging to be made upon need, i.e., upon the state of charge, SOC, is below the first threshold the lifetime of the battery may be prolonged. This since most batteries is degraded less if they are not having a too high or too low SOC most of the time. For example, a SOC between 10% and 80% is more health for a battery.

By allowing recharging of the battery of a battery powered device as defined in the present invention maintenance of battery powered devices may be simplified and made less costly.

Using light as energy harvesting source facilitate in reduction of cost and technical complexity especially when the electromagnetic-radiation emitter(s) is/are part(s) of an indoor lighting system. In such system signaling using light may also be a cost efficient and low complex solution by reusing the light sources etc.

Alternatively, using radio waves as energy sources may also reduce cost and technical complexity since same transceiver architecture as for communication can be used for the signaling and energy harvesting.

The charging-request signal may comprise information pertaining to a frequency range of the electromagnetic radiation the energy-harvesting module is capable to harvest energy from. The method may further comprise, extracting, from the charging-request signal, information pertaining to a frequency range of desired electromagnetic radiation. Instructing an electromagnetic-radiation emitter to expose the battery powered device for electromagnetic radiation may comprise sending information pertaining to the frequency range of desired electromagnetic radiation to the electromagnetic-radiation emitter. This facilitate in selecting an electromagnetic-radiation emitter that is capable of emitting electromagnetic radiation having a desired frequency range.

The method may further comprise selecting one or more electromagnetic-radiation emitters among a plurality of electromagnetic-radiation emitters based on a position of the battery-powered device, and instructing the selected electromagnetic-radiation emitter to expose the battery powered device for electromagnetic radiation. This facilitate in selecting an electromagnetic-radiation emitter that is capable of emitting electromagnetic radiation to the battery powered device.

The method may further comprise: sending a positive charging request acknowledgment, ACK, to the battery powered device, and upon receipt of the ACK, activating an energy-harvesting energy module at the battery powered device. This may save lifetime of the battery powered device since the energy-harvesting energy module is only active when it is needed for charging. This may prolong the lifetime of the energy-harvesting energy module. This may also prolong the lifetime of the battery.

The method may further comprise: sending a negative charging request acknowledgment, NAK, to the battery powered device, and upon receipt of the NAK, setting the battery powered device in an energy-conservation mode. Setting the battery powered device in an energy-conservation mode upon charging is not made possible may allow the battery powered device to be limited to only perform some really crucial tasks. This may prolong the uptime of the battery powered device.

The method may further comprise: upon detecting, at the battery-powered device, that the state of charge of the battery of the battery powered device is above a second threshold, sending to the control engine a charging stop signal, upon detection of the charging stop signal, generating, at the control engine, a stop charging signal and transmitting it to the electromagnetic-radiation emitter currently emitting electromagnetic-radiation for charging the battery-powered device, upon receipt of the charging stop signal, at the electromagnetic-radiation emitter, stop emitting electromagnetic-radiation for charging the battery-powered device. Hence, it may be safeguarded that energy at the electromagnetic-radiation emitter may be saved. Moreover, it may be safeguarded that the battery of the battery-powered device is not charged above a specific SOC, e.g., above 80%.

According to a second aspect a battery-powered device is provided. The battery-powered device comprising: a wireless communication unit; a battery; an energy-harvesting module configured to harvest energy from electromagnetic radiation; and control circuitry. The control circuitry is configured to execute: a state of charge function configured to determine a present state of charge of the battery, and a charging-request function configured to, upon the determined state of charge of the battery is below a first threshold, generate a charging-request signal. The wireless communication unit is configured to send the charging-request signal upon its generation.

The charging-request signal may comprise information pertaining to a frequency range of the electromagnetic radiation the energy-harvesting module is capable to harvest energy from.

The charging-request signal may further comprise information pertaining to one or more of: a device ID; a position of the battery-powered device; and a minimum amount of received power required for performing energy harvesting.

The wireless communication unit may be configured to communicate using a short-range communication protocol, such as one or more of Bluetooth; WiFi; LiFi; Cellular data, 2G-6G; and Zigbee.

The control circuitry is configured to further execute a confirmation function configured to receive a confirmation signal. The confirmation function may be configured to, upon the confirmation signal is indicative of a positive acknowledgement, ACK, set the battery-powered device in an energy-harvesting mode. The confirmation function may be configured to, upon the confirmation signal is indicative of a negative acknowledgement, NAK, set the battery-powered device in an energy-conservation mode.

The charging-request function may further be configured to, upon the determined state of charge of the battery is above a second threshold, generate a charging stop signal. The confirmation function may be configured to deactivate the energy-harvesting module based on the charging stop signal. Hence, the charging stop signal may trigger deactivation of the energy-harvesting module. The wireless communication unit may be configured to transmit the charging stop signal upon its generation. By transmitting the charging stop signal deactivation of the electromagnetic-radiation emitter providing the battery-powered device with electromagnetic radiation may be made.

The above-mentioned features and effects of the first aspect, when applicable, apply to this second aspect as well. In order to avoid undue repetition, reference is made to the above.

According to a third aspect a control engine is provided. the control engine comprising: a short-range wireless transceiver configured to detect a charging-request signal from a battery-powered device arranged at a distance from the control engine; and circuitry configured to execute: a charging function configured to, upon detection of a charging-request signal, generate a charging-initiation signal comprising charging information to an electromagnetic-radiation emitter, and a communication function configured to transmit the charging-initiation signal to the electromagnetic-radiation emitter.

The charging function may be configured to: extract, from the charging-request signal, information pertaining to a frequency range of desired electromagnetic radiation, and include information pertaining to the frequency range of desired electromagnetic radiation into the charging-initiation signal.

The charging function may further be configured to extract, from the charging-request signal, information pertaining to a position of the battery-powered device, select one or more electromagnetic-radiation emitters among a plurality of electromagnetic-radiation emitters based on the position of the battery-powered device, and send the charging-initiation signal to the selected one or more electromagnetic radiation emitters.

The circuitry may further be configured to execute a charging compliance function. The compliance function being configured to: confirm whether the control engine is able and/or allowed to provide the, in the charging-request signal, requested charging, upon positive confirmation, generate a confirmation signal comprising a positive acknowledgement, ACK, and send the ACK via the short-range wireless transceiver to the battery-powered device and/or instruct the charging function to generate the charging-initiation signal, and upon negative confirmation, generate a confirmation signal comprising a negative acknowledgement, NAK, and send the NAK via the short-range wireless transceiver to the battery-powered device and/or send the NAK to a maintenance server.

The short-range wireless transceiver may be configured to detect a charging stop signal from the battery-powered device. The charging function may further be configured to, upon detection of the charging stop signal, generate a stop charging signal and transmit it to an electromagnetic-radiation emitter currently emitting electromagnetic-radiation for charging the battery-powered device.

The above-mentioned features and effects of the first and second aspects, when applicable, apply to this second aspect as well. In order to avoid undue repetition, reference is made to the above.

According to a fourth aspect a system is provided. The system comprising: a battery-powered device according to the second aspect; a control engine according to the third aspect; and one or more electromagnetic-radiation emitters each being arranged to expose the battery-powered device for electromagnetic radiation upon receipt of a charging-initiation signal.

The above-mentioned features and effects of the first, second and third aspects, when applicable, apply to this second aspect as well. In order to avoid undue repetition, reference is made to the above.

A further scope of applicability will become apparent from the detailed description given below. However, it should be understood that the detailed description and specific examples are given by way of illustration only.

It is to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above and other aspects will now be described in more detail, with reference to appended figures. The figures should not be considered limiting; instead they are used for explaining and understanding.

As illustrated in the figures, the sizes of layers and regions may be exaggerated for illustrative purposes and, thus, are provided to illustrate the general structures. Like reference numerals refer to like elements throughout.
Fig. 1 illustrate a technical system comprising a battery powered device, a control engine and a plurality of electromagnetic-radiation emitters.
Fig. 2 is a block diagram of a method for charging a battery of a battery powered device.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

The basic concept of the present innovation is that once a battery powered device detects a low state of charge it transmits a charging request via a wireless communication channel. The battery powered device having the ability to harvest energy from electromagnetic radiation, especially for charging the battery of the battery powered device. The charging request comprising information about the energy harvesting capabilities of the battery powered device, e.g., wavelength requirements and/or intensity requirements. The wavelength requirements may be one or more of; infra-red (IR) radiation, visible light, ultraviolet (UV) light, or radio wavelengths (e.g. millimeter waves [30-300 GHz], or sub 6 GHz) A control engine detecting the charging request is then configured to expose the battery powered device for electromagnetic radiation (of the requested wavelength and/or intensity). The control engine is set to do this by instructing an electromagnetic-radiation emitter to emit electromagnetic radiation (of the requested wavelength and/or intensity) onto the battery powered device requesting to be charged by energy harvesting from electromagnetic radiation.

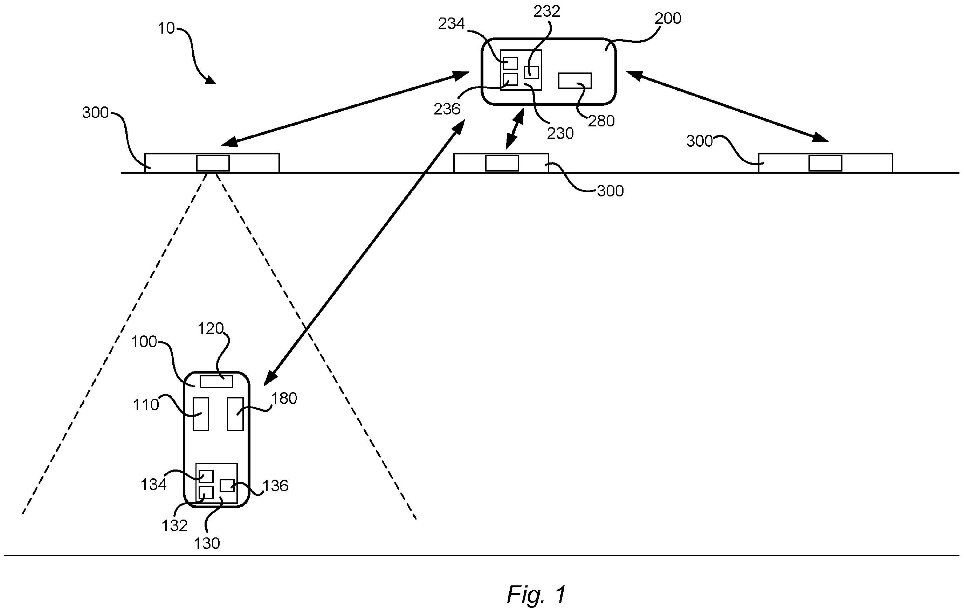

Fig. 1 illustrates a technical system 10. The technical system comprises one or more battery powered devices 100, a control engine 200 and one or more electromagnetic-radiation emitters 300. The one or more battery powered devices 100 are arranged at a distance from the control engine 200. Each battery powered device 100 is configured to wirelessly send information, e.g., comprising instructions, to the control engine 200. The control engine 200 is configured to act on information/instructions received from a battery powered device 100. The control engine 200 is further configured to send information, e.g., comprising instructions, to one or more of the one or more electromagnetic-radiation emitters 300. The control engine 200 may communicate with the one or more electromagnetic-radiation emitters 300 over a wireless communication channel and/or a wired communication channel. Each electromagnetic-radiation emitter 300 is configured to act on information/instructions received from the control engine 200.

In case of a plurality of electromagnetic-radiation emitters 300, each electromagnetic-radiation emitter 300 may be of a same type of electromagnetic-radiation emitter. However, the technical system 10 may comprise different types of electromagnetic-radiation emitters 300. Non-limiting examples of an electromagnetic-radiation emitter 300 is a luminaire of, e.g., a lighting system and a radio wave emitter of, e.g., a short-range wireless communication system. The electromagnetic-radiation emitters 300 are typically stationary arranged in the building housing the technical system 10. The electromagnetic-radiation emitters 300 are typically spread out in the building housing the technical system 10. Each electromagnetic-radiation emitter 300 is configured to expose a sub-portion of a space for electromagnetic radiation. Hence, a specific electromagnetic-radiation emitter 300 may be configured to expose one or more battery powered device 100 arranged in the portion of space it is exposing. The control engine 200 may be provided with information pertaining to a location of each electromagnetic-radiation emitter 300. That is, the control engine 200 may be provided with information pertaining to a portion of the space which the specific electromagnetic-radiation emitter 300 is configured to expose with electromagnetic- radiation. Moreover, the control engine 200 may be provided with information pertaining to characteristics of each electromagnetic-radiation emitter 300. Examples of such characteristics are: wavelength range of the electromagnetic-radiation emitter 300; if the wavelength of the electromagnetic-radiation emitter 300 is controllable or not; intensity range of the electromagnetic-radiation emitter 300; if the intensity of the electromagnetic-radiation emitter 300 is controllable or not; beam shaping ability of the electromagnetic-radiation emitter 300.

A specific battery powered device 100 may be a control device configured to control other devices of the technical system 10. For example, the battery powered device 100 can be one or more of: an on/off switch and/or dimmer for one or more luminaries of a lighting system, a temperature controller for devices of a heating/cooling system, an air flow controller in a ventilation system. A specific battery powered device 100 may be a sensor. Such a sensor may be configured to monitor presence of moving objects (such as a person or animal). Alternatively, or in combination, such a sensor may be configured to monitor environmental data, such as smoke, concentration of a specific gas, etc. A specific battery powered device 100 may be stationary arranged in the building housing the technical system 10. A specific battery powered device 100 may be a non-stationary device. In case of a battery powered device 100 being stationary arranged, the control engine 200 may be provided with information pertaining to a location of the battery powered device 100 within the housing the technical system 10. In case of a battery powered device 100 being non-stationary, the control engine 200 may be configured to keep track of a location of the battery powered device 100, at least as long as the battery powered device 100 is within the building housing the technical system 10.

In connection with Fig. 1 the technical system 10 is illustrated in a situation when one of the electromagnetic-radiation emitters 300 is instructed to emit electromagnetic radiation towards a battery powered device 100. This is illustrated by the dashed lines. The electromagnetic-radiation emitter 300 received instructions from the control engine 200 to expose the battery powered device 100 with electromagnetic radiation. This since the battery powered device 100 sent a charging-request signal to the control engine 200. The charging-request signal was generated due to that a state-of charge of the battery powered device 100 was below a first threshold. The charging-request signal may comprise a desired wavelength of electromagnetic radiation. The charging-request signal may comprise a location of the battery powered device 100. The control engine 200 may be configured to decided which electromagnetic-radiation emitter 300 to instruct for exposing the battery powered device 100 for electromagnetic radiation based on one or more of the desired wavelength of electromagnetic radiation and the location of the battery powered device. The control engine 200 may further be configured to decided which electromagnetic-radiation emitter 300 to instruct for exposing the battery powered device 100 for electromagnetic radiation based on a location of the electromagnetic-radiation emitter 300.

The battery powered device 100, the control engine 200, the electromagnetic-radiation emitter 300 and a method for charging a battery 110 of the battery powered device 100 will below be discussed in more detail.

With reference to Fig. 1, a battery powered device 100 will be discussed in more detail. The battery-powered device 100 comprises a battery 110 powering the battery powered device 100. The battery 110 is a rechargeable battery.

The battery-powered device 100 further comprises an energy-harvesting module 120. The energy-harvesting module 120 is configured to harvest energy from electromagnetic radiation. For example, the energy-harvesting module 120 may comprise solar/light cells. The solar/light cells being configured to transform light to electricity. Alternatively, or in combination, the energy-harvesting module 120 may be configured to harvest energy from radio waves, according to techniques well known in the art. The energy-harvesting module 120 is connected to the battery 110 in such manner so that upon harvesting energy, the energy-harvesting module 120 is configured to charge the battery 110.

The battery-powered device 100 further comprises control circuitry 130. The control circuitry 130 may be hardware or software implemented. The control circuitry 130 may even be a combination of hardware and software portions. The software may be executed by a processor being part of the control circuitry 130. In case of being full or partly software implemented the control circuitry 130 may comprise a memory storing software code portions. The control circuitry 130 is configured to perform one or more functions of the battery-powered device 100.

The control circuitry 130 is configured to execute a state of charge function 132. The state of charge function 132 is configured to determine a present state of charge of the battery 110.

The control circuitry 130 is further configured to execute a charging-request function 134. The charging-request function 134 is configured to generate a charging-request signal. Especially, the charging-request function 134 is configured to generate the charging-request signal upon the determined state of charge of the battery 110 is below a first threshold. The charging-request signal may comprise information pertaining to a frequency range of the electromagnetic radiation the energy-harvesting module 120 is capable to harvest energy from. The charging-request signal may further comprise information pertaining to one or more of: a device ID for the battery powered device 100; a position of the battery-powered device 100; and a minimum amount of received power required for performing energy harvesting.

The charging-request function 134 may further be configured to, upon the determined state of charge of the battery is above a second threshold, generate a charging stop signal. The second threshold is above the first threshold. According to a non-limiting example, the first threshold is 10% state of charge, SOC, and the second threshold is 80% SOC. The charging stop signal may be triggering deactivation of the energy-harvesting module 120. Moreover, the charging stop signal may be transmitted to the control engine 200.

The battery-powered device 100 further comprises a wireless communication unit 180. The wireless communication unit 180 is configured to transmit the charging-request signal upon its generation. Hence, the battery powered device 100 monitors the state of charge of the battery 110 and once it passes below a first threshold, the battery powered device 100 wirelessly sends out a charging request. The wireless communication unit 180 is configured to transmit the charging stop signal upon its generation. Hence, the battery powered device 100 monitors the state of charge of the battery 110 and once it passes above a second threshold, the battery powered device 100 wirelessly sends out a stop charging request. The wireless communication unit 180 may be configured to communicate using a short-range communication protocol. Examples of short-range communication protocols are: Bluetooth, especially BLE; WiFi; LiFi; Cellular data, e.g. 2G-6G; and Zigbee. However, it is understood that other short-range communication protocols may as well be used. The might even be a future protocol dedicated for energy harvesting.

The control circuitry 130 may further be configured to execute a confirmation function 136. The confirmation function 136 is configured to receive a confirmation signal. The confirmation signal carrying information pertaining to if electromagnetic radiation required by the battery-powered device 100, e.g., compatible with the energy-harvesting module 120, can be provided to the battery-powered device 100 or not. The confirmation signal may be a dedicated signal. Alternatively, the confirmation signal may be receipt of electromagnetic radiation of "correct" wavelength impinging the energy-harvesting module 120. The confirmation function 136 may be configured to, upon the confirmation signal is indicative of a positive acknowledgement, ACK, set the battery-powered device 100 in an energy-harvesting mode. Setting the battery-powered device 100 in an energy-harvesting mode may comprise activating the energy-harvesting module 120. Hence, the energy-harvesting module 120 may be set in a normally-off mode and only be activated upon being impinged with electromagnetic radiation of "correct" wavelength and/or intensity. Further, the confirmation function 136 may be configured to, upon the confirmation signal is indicative of a negative acknowledgement, NAK, set the battery-powered device 100 in an energy-conservation mode. The energy-conservation mode may be a sleep mode of the battery-powered device 100. Upon the confirmation signal being a NAK, the battery-powered device 100 may further be configured to generate and send a battery-replacement signal. Such a battery-replacement signal is typically addressed to a maintenance service of the building housing the technical system 10.

In connection with Fig. 1 the control engine 200 will be discussed in more detail. The control engine 200 comprises a wireless transceiver 280. The wireless transceiver 280 is configured received and possibly also transmit data over a wireless short-range communication protocol, such as Bluetooth, especially BLE; WiFi; LiFi; Cellular data, e.g., 2G-6G; and Zigbee. However, it is understood that other short-range communication protocols may as well be used. Especially, the wireless transceiver 280 is configured to receive a charging-request signal transmitted from a battery-powered device 100. Hence, the wireless transceiver 280 is configured to detect a charging-request signal. The wireless transceiver 280 may further be configured to receive a charging stop signal transmitted from the battery-powered device 100. Hence, the wireless transceiver 280 is configured to detect a charging stop signal.

The control engine 200 further comprises circuitry 230. The circuitry 230 may be hardware or software implemented. The circuitry 230 may even be a combination of hardware and software portions. The software may be executed by a processor being part of the circuitry 230. In case of being full or partly software implemented the circuitry 230 may comprise a memory storing software code portions. The circuitry 230 is configured to perform one or more functions of the control engine 200.

The circuitry 230 is configured to execute a charging function 232. The charging function 232 is configured to generate a charging-initiation signal. Especially, the charging function 232 is configured to generate the charging-initiation signal upon the wireless transceiver 280 has received/detected a charging-request signal. Typically, the charging-initiation signal comprises charging information bound for a specific electromagnetic-radiation emitter 300 among the one or more electromagnetic-radiation emitters 300. On that note, the charging function 232 may be configured to, from the charging-request signal, extract information pertaining to a position of the battery-powered device 100 having generated the charging-request signal. Based on the information pertaining to the position of the battery-powered device 100, the charging function 232 may be configured to select one or more electromagnetic-radiation emitters 300 to which a charging-initiation signal is to be sent. As an alternative to, or in combination with, the charging function 232 may be configured to, from the charging-request signal, extract information pertaining to an ID of the battery-powered device 100 having generated the charging-request signal. Based on the information pertaining to the ID of the battery-powered device 100, the charging function 232 may be configured to select one or more electromagnetic-radiation emitters 300 to which a charging-initiation signal is to be sent. This selection may, e.g., be made by accessing a look-up table comprising which one or more electromagnetic-radiation emitters 300 that are being able to emit electromagnetic radiation bound for a specific battery-powered device 100.

The charging function 232 may further be configured to extract information pertaining to a frequency range of desired electromagnetic radiation to be emitted from the electromagnetic-radiation emitter 300. Typically, the information pertaining to a frequency range of desired electromagnetic radiation is extracted from the charging-request signal. The charging function 232 may further be configured to include information pertaining to the frequency range of desired electromagnetic radiation into the charging-initiation signal.

The charging function 232 may further be configured to generate a stop charging signal. Especially, the charging function 232 is configured to generate the stop charging signal upon the wireless transceiver 280 has received/detected a charging stop signal.

The circuitry 230 is further configured to execute a communication function 234. The communication function 234 is configured to transmit the charging-initiation signal. Especially, the communication function 234 is configured to transmit the charging-initiation signal to the specific electromagnetic-radiation emitter 300 among the one or more electromagnetic-radiation emitters 300. The transmitting of the charging-initiation signal may be made by means of the wireless transceiver 280. In such case the wireless transceiver 280 is configured to establish a communication channel to the specific electromagnetic-radiation emitter 300 and possibly also to other electromagnetic-radiation emitters 300 among the one or more electromagnetic-radiation emitters 300. Alternatively, the transmitting of the charging-initiation signal may be made by means of another wired or wireless transceiver 290.

The communication function 234 may further be configured to transmit the stop charging signal to an electromagnetic-radiation emitter 300. Especially to the electromagnetic-radiation emitter 300 currently emitting electromagnetic-radiation for charging the battery-powered device 200 having issued the charging stop signal.

The circuitry 230 may further be configured to execute a charging compliance function 236. The charging compliance function 236 is configured to confirm that an electromagnetic-radiation emitter 300 is present that is able and/or allowed to provide the, in the charging-request signal, requested charging. In this context "is able to" has the meaning of: does there exist an electromagnetic-radiation emitter 300 being able to emit electromagnetic radiation onto the battery-powered device 100 that issued the charging-request signal; can that electromagnetic-radiation emitter 300 provide the requested wavelength of electromagnetic radiation; and/or can that electromagnetic-radiation emitter 300 provide enough power of the requested wavelength of electromagnetic radiation. In this context "is allowed to" has the meaning of: is the requesting battery-powered device 100 on a list of battery-powered devices that are allowed to receive power. The device ID may be used for checking this. The ID may be stored in a data base of allowed devices. Allowed devices may be configured for instance during a commissioning of the system. The advantage of such check is that only allowed devices or devices belonging to the system is allowed to charge. Upon positive confirmation, the charging compliance function 236 is configured to generate a confirmation signal comprising a positive acknowledgement, ACK. The charging compliance function 236 may be configured to and send the ACK to the requesting battery-powered device 100. Such sending of the ACK may be made using the wireless transceiver 280. Alternatively, or in combination, the charging compliance function 236 is also configured to instruct the charging function 232 to generate the charging-initiation signal. Upon negative confirmation, the charging compliance function 236 is configured to generate a confirmation signal comprising a negative acknowledgement, NAK. The charging compliance function 236 may be configured to and send the NAK to the requesting battery-powered device 100. Such sending of the NAK may be made using the wireless transceiver 280. The charging compliance function 236 may, alternatively, or in combination, be configured to and send the NAK to a maintenance server.

Upon an electromagnetic-radiation emitter 300 is receiving a charging-initiation signal it is configured to initiate emission of electromagnetic radiation, thereby exposing a battery-powered device 100 for electromagnetic radiation. Upon an electromagnetic-radiation emitter 300 is receiving a stop charging signal it is configured to stop emission of electromagnetic radiation, thereby stop exposing a battery-powered device 100 for the emitted electromagnetic radiation.

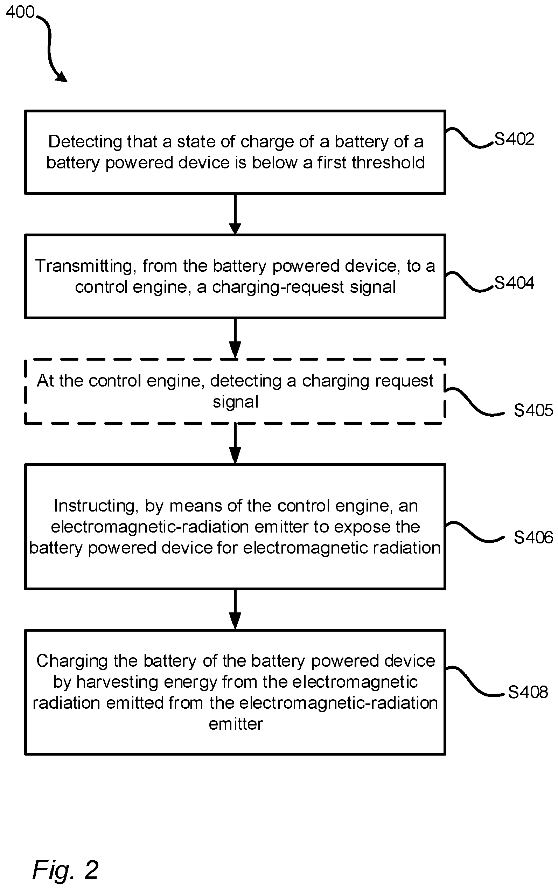

In connection with Fig. 2 a method 400 for charging a battery 110 of a battery powered device will be discussed. The method 400 comprises a plurality of steps. The steps may be performed in any suitable order.

The method 400 comprising, at the battery powered device 100, detecting S402 that a state of charge of the battery 110 of the battery powered device 100 is below a first threshold. Hence, the battery powered device 100 obtains information about state of charge of its battery 110. This can for instance be made by measuring the current or voltage level over the battery 110. Once the state of charge of the battery 110 is below the first threshold it is determined that the battery 110 is in need for being charged. This in order to safeguard future operation of the battery powered device 100.

The method further comprises wirelessly transmitting S404, from the battery powered device 100, to a control engine 200, a charging-request signal. Hence, the battery powered device 100 transmits a charging request over a wireless communication protocol as described above. The charging request signal may comprise energy harvesting capabilities as well as other information needed for successful wireless charging (spatial position info, device ID etc. as also described above).

The method may further comprise, at the control engine 200, detecting S405 a charging request signal transmitted over the wireless communication protocol.

The method further comprises instructing S406, by means of the control engine 200, an electromagnetic-radiation emitter 300 to expose the battery powered device 100 for electromagnetic radiation. Hence, the control engine initiates a charging action. As discussed above, the charging action can be based on charging request information in the charging request signal. How to select an electromagnetic-radiation emitter 300 to instruct and how to instruct the selected electromagnetic-radiation emitter 300 is discussed above in connection with Fig. 1 and the discussion of the control engine 200. In order to avoid undue repletion reference is made to the above discussion.

The method further comprises charging S408 the battery 110 of the battery powered device 100 by harvesting energy from the electromagnetic radiation emitted from the electromagnetic-radiation emitter 300. The harvesting is made by the energy-harvesting module 120 of the battery powered device 100 as discussed above.

The method may further comprise, at the control engine, monitoring whether the charging action failed or not. In case of success, the method may comprise sending, from the control engine 200 to the battery powered device 100, a positive charging request acknowledgment, ACK. This is further discussed above. In case of failed charging action, the method may comprise, sending, from the control engine 200 to the battery powered device 100, a negative charging request acknowledgement, NAK, and/or reporting the failed charging action to a system maintenance server.

The method may further comprise, at the battery powered device 100, monitoring for a charging request acknowledgment. Upon receiving a positive charging request acknowledgment, ACK, start the charging S408. Upon receiving a negative charging request acknowledgement, NAK, setting the battery powered device 100 in an energy-conservation mode.

The person skilled in the art realizes that the present invention by no means is limited to what is explicitly described above. On the contrary, many modifications and variations are possible within the scope of the appended claims.

For example, a single device may have capabilities to both act as a control engine 200 and as an electromagnetic-radiation emitter 300. Alternatively, the control engine 200 and the electromagnetic-radiation emitter 300 are different devices. Hence, the control engine 200 may be embodied in a specific device, such as a server. Alternatively, the control engine 200 may be arranged in one of the one or more electromagnetic-radiation emitters 300. Yet alternatively, the control engine 200 may be distributed over a plurality of different devices.

The control engine 200 and the one or more battery powered device 100 may be configured to communicate using a first wireless communication protocol. The control engine 200 and the one or more electromagnetic-radiation emitters 300 may be configured to communicate using a second communication protocol, the second communication protocol being different from the first wireless communication protocol. The second communication protocol does not even need to be wireless, also wired communication protocols may be used.

The control engine 200 may broadcast the charging-initiation signal. If so, the charging-initiation signal may, e.g., comprise information on where the battery powered device 100 that is requesting to be exposed to electromagnetic radiation is located and/or by which wavelength(s) the battery powered device 100 is requesting to be exposed to. Each electromagnetic-radiation emitter 300 receiving the broadcasted charging-initiation signal may then act upon the received information. That is, if it can fulfil the requests, i.e., if it can emit the desired wavelength(s) and/or expose the desired location.

The control engine 200 may unicast the charging-initiation signal. That is, the control engine 200 can direct the charging-initiation signal to one specific electromagnetic-radiation emitter 300. The selection of specific electromagnetic-radiation emitter 300 to unicast to may, e.g., be decided by having knowledge of which locations the different electromagnetic-radiation emitter(s) 300are able to expose for electromagnetic radiation and/or which wavelength it may emit.

Additionally, variations can be understood and effected by the skilled person in practicing the claimed invention, from a study of the drawings, the disclosure, and the appended claims.

## Claims

1. A method for charging a battery (110) of a battery powered device (100), the method comprising:
at the battery powered device (100), detecting (S402) that a state of charge of the battery (110) of the battery powered device (100) is below a first threshold;
wirelessly transmitting (S404), from the battery powered device (100), to a control engine (200), a charging-request signal;
instructing (S406), by means of the control engine (200), an electromagnetic-radiation emitter (300) to expose the battery powered device (100) for electromagnetic radiation; and
charging (S408) the battery (110) of the battery powered device (100) by harvesting energy from the electromagnetic radiation emitted from the electromagnetic-radiation emitter (300).

2. The method according to claim 1,
wherein charging-request signal comprises information pertaining to a frequency range of the electromagnetic radiation the energy-harvesting module (120) is capable to harvest energy from,
wherein the method further comprises, extracting, from the charging-request signal, information pertaining to a frequency range of desired electromagnetic radiation, and
wherein instructing (S406) an electromagnetic-radiation emitter (300) to expose the battery powered device (100) for electromagnetic radiation comprises sending information pertaining to the frequency range of desired electromagnetic radiation to the electromagnetic-radiation emitter (300).

3. The method according to claim 1 or 2, further comprising:
selecting one or more electromagnetic-radiation emitters (300) among a plurality of electromagnetic-radiation emitters (300) based on a position of the battery-powered device (100), and
instructing the selected electromagnetic-radiation emitter (300) to expose the battery powered device (100) for electromagnetic radiation.

4. The method according to any one of claims 1-3, further comprising:
sending a positive charging request acknowledgment, ACK, to the battery powered device (100), and
upon receipt of the ACK, activating an energy-harvesting energy module (120) at the battery powered device (100).

5. The method according to any one of claims 1-3, further comprising:
sending a negative charging request acknowledgment, NAK, to the battery powered device (100), and
upon receipt of the NAK, setting the battery powered device 100 in an energy-conservation mode.

6. The method according to any one of claims 1-5, further comprising:
upon detecting, at the battery-powered device (100), that the state of charge of the battery (110) of the battery powered device (100) is above a second threshold, sending to the control engine (200) a charging stop signal,
upon detection of the charging stop signal, generating, at the control engine (200), a stop charging signal and transmitting it to the electromagnetic-radiation emitter (300) currently emitting electromagnetic-radiation for charging the battery-powered device (100),
upon receipt of the charging stop signal, at the electromagnetic-radiation emitter (300), stop emitting electromagnetic-radiation for charging the battery-powered device (100).

7. A battery-powered device comprising:
a wireless communication unit (180);
a battery (110);
an energy-harvesting module (120) configured to harvest energy from electromagnetic radiation; and
control circuitry (130) configured to execute:
a state of charge function (132) configured to determine a present state of charge of the battery (110), and
a charging-request function (134) configured to, upon the determined state of charge of the battery (110) is below a first threshold, generate a charging-request signal,
wherein the wireless communication unit (180) is configured to send the charging-request signal upon its generation.

8. The battery-powered device according to claim 7, wherein the control circuitry (130) is configured to further execute:
a confirmation function (136) configured to receive a confirmation signal,
wherein the confirmation function (136) is configured to, upon the confirmation signal is indicative of a positive acknowledgement, ACK, set the battery-powered device in an energy-harvesting mode by activating the energy-harvesting module (120), and
wherein the confirmation function (136) is configured to, upon the confirmation signal is indicative of a negative acknowledgement, NAK, set the battery-powered device in an energy-conservation mode.

9. The battery-powered device according to claim 7 or 8, wherein the charging-request function (134) is further configured to, upon the determined state of charge of the battery (110) is above a second threshold, generate a charging stop signal;
wherein the confirmation function (136) is configured to deactivate the energy-harvesting module (120) based on the charging stop signal; and/or
wherein the wireless communication unit (180) is configured to transmit the charging stop signal upon its generation.

10. A control engine comprising:
a short-range wireless transceiver (280) configured to detect a charging-request signal from a battery-powered device (100) arranged at a distance from the control engine; and
circuitry (230) configured to execute:
a charging function (232) configured to, upon detection of a charging-request signal, generate a charging-initiation signal comprising charging information to an electromagnetic-radiation emitter (300), and
a communication function (234) configured to transmit the charging-initiation signal to the electromagnetic-radiation emitter (300).

11. The control engine according to claim 10, wherein the charging function (232) is further configured to:
extract, from the charging-request signal, information pertaining to a frequency range of desired electromagnetic radiation, and
include information pertaining to the frequency range of desired electromagnetic radiation into the charging-initiation signal.

12. The control engine according to claim 10 or 11, wherein the charging function (232) is further configured to:
extract, from the charging-request signal, information pertaining to a position of the battery-powered device (100),
select one or more electromagnetic-radiation emitters (300) among a plurality of electromagnetic-radiation emitters (300) based on the position of the battery-powered device (100), and
send the charging-initiation signal to the selected one or more electromagnetic radiation emitters (300).

13. The control engine according to any one of claims 10-12, wherein the circuitry (230) is further configured to execute:
a charging compliance function (236) configured to:
confirm whether the control engine is able and/or allowed to provide the, in the charging-request signal, requested charging,
upon positive confirmation, generate a confirmation signal comprising a positive acknowledgement, ACK, and send the ACK via the short-range wireless transceiver (280) to the battery-powered device (100) and/or instruct the charging function (232) to generate the charging-initiation signal, and
upon negative confirmation, generate a confirmation signal comprising a negative acknowledgement, NAK, and send the NAK via the short-range wireless transceiver (280) to the battery-powered device (100) and/or send the NAK to a maintenance server.

14. The control engine according to any one of claims 10-13, wherein the short-range wireless transceiver (280) is configured to detect a charging stop signal from the battery-powered device (100),
wherein the charging function (232) is further configured to, upon detection of the charging stop signal, generate a stop charging signal and transmit it to an electromagnetic-radiation emitter (300) currently emitting electromagnetic-radiation for charging the battery-powered device (100).

15. A system comprising:
a battery-powered device (100) according to any one of claims 7-9;
a control engine (200) according to any one of claims 10-14; and
one or more electromagnetic-radiation emitters (300) each being arranged to expose the battery-powered device (100) for electromagnetic radiation upon receipt of a charging-initiation signal.
